# EUROPEAN PATENT SPECIFICATION

(11) **EP 1 482 666 B1**
(45) Date of publication and mention of the grant of the patent: **19.09.2007**
(21) Application number: 04012348.1
(22) Date of filing: 25.05.2004
(51) Int. Cl.: H04J 3/08

(54) **Improvement of protocol for SDH/SONET traffic protection in optical ring network**
Verbesserung des Protokolls für den SDH/SONET Verkehrsschutz in einem optisches Ringnetzwerk
Perfectionnement d'un protocole pour la protection du trafic SDH/SONET dans un réseau à anneau de fibre optique

(30) Priority: 28.05.2003 IL 15617803
(43) Date of publication of application: 01.12.2004
(73) Proprietor: ECI Telecom Ltd., Petach-Tikva 49517 (IL)
(72) Inventor: Michaeli, Eliyahu, Beit-Shemesh 99547 (IL); Shalev, Amir, Kfar-Sava 44209 (IL)
(74) Representative: Modiano, Micaela Nadia

(56) References cited:
- EP-A- 1 235 373
- US-A- 5 978 354

## Description

### Field of the Invention

The invention relates to improving known protocols for protection SDH/SONET traffic in optical ring networks, more particularly, improvements in BLSR and MS-SPRING protocols.

### Background of the invention

According to the accepted international standards, SDH/SONET networks utilize standard frames for transmitting data.

The Synchronous Digital Hierarchy (SDH) and its North-American equivalent, the Synchronous Optical Network (SONET), are the globally accepted, closely related and compatible standards for data transmission in the public wide area network (WAN) domain.

SONET and SDH govern interface parameters; rates, formats and multiplexing methods; operations, administration, maintenance and provisioning for high-speed signal transmission. SONET is primarily a set of North American standards with a fundamental transport rate beginning at approximately 52 Mb/s (i.e., 51.84 Mb/s), while SDH, principally used in Europe and Asia, defines a basic rate near 155 Mb/s (to be precise, 51.84 x 3 = 155.52 Mb/s). From a transmission perspective, together they provide an international basis for supporting both existing and new services in the developed and developing countries.

For transmitting data, SDH and SONET use frame formats transmitted every 125 µs (8000 frames/s). Because of compatibility between SDH and SONET, their basic frames are similarly structured, but differ in dimension which fact reflects the basic transmission rates of 155.52 and 51.84 Mb/s, respectively. To be more specific, a basic frame format of SDH is 9 rows of 270 bytes, or 2430 bits/frame, corresponding to an aggregate frame rate of 155.52 Mb/s. For SDH systems, the mentioned basic frame transmitted at the rate 155.52 Mb/s forms the fundamental building block called Synchronous Transport Module Level-1 (STM-1). For SONET systems, the basic frame has dimensions of 9 rows by 90 byte columns and, being transmitted at the rate 51.84 Mb/s, forms the appropriate fundamental building block called Synchronous Transport Signal Level-1 (STS-1). A three-fold traffic block STS-3 in SONET can be assembled from three STS-1s and actually corresponds to the above-mentioned STM-1 of SDH.

Each basic frame of SONET or SDH comprises an information portion called Information Payload and a service portion called Overhead (OH), the latter being subdivided into a number of areas of overhead bytes (for example a Path Overhead layer POH, a Transport Overhead layer TOH), predestined for various service and control functions. In SDH, no Transport overhead is directly defined. It is considered, that the layer of Transport overhead in SDH is actually formed by a Multiplex Section Overhead MSOH and a Regenerator Section Overhead RSOH.

During decoding and checking of a SONET or SDH signal transmitted in a path, it is generally "stripped down" in layers by a control system, first decoding and checking the section information, then the line information and thereafter the path information. At each step, error checking is provided and errors or alarms (if detected) must be indicated either to the local control system, or to the originating path terminal element to inform about troubles in the path.

Modem optical communication networks are usually built using a ring-like configuration, where data traffic can be transmitted both clockwise and counterclockwise. This basic configuration is called optical ring. Protection of data traffic in optical rings has been developed and standardized for the above-mentioned two accepted standards - SDH and SONET.

The document US 5978354 discloses an optical transmission system using the above mentioned ring configuration, where a method of controlling the switching of a transmission line in the event of transmission line failure is adopted.

For optical ring networks transmitting SDH traffic, there exists a so-called MS-SPRING (Multiplex Section Shared Protection Ring) system of traffic protection described in an ITU-T Standard Recommendation G.841.

For the SONET optical networks, a so-called BLSR (Bi-Directional Line Switched Ring) protection system was proposed, defined in the North American Standard of Bellcor GR.1230. Conceptually, BLSR is very close to MS-SPRING.

The MS-SPRING system proposes two options for protecting traffic in optical rings. The first option is developed for optical rings formed by two-fiber links connecting network elements, wherein each fiber serves one of two opposite traffic directions in the ring. Half the capacity of each fiber is intended for the protection purposes. The second option is intended for rings with four-fiber links, where each direction of optical traffic between the network elements is served by two optical fibers. One of the two fibers of one and the same direction is intended for the purposes of protection.

The MS-SPRING system completely performs its functions for SDH traffic when a fiber cut occurs in the ring between two adjacent network elements (nodes) and the traffic should be redirected. In such a case each of the two network elements redirects the traffic, which should have been sent via the cut fiber, to the opposite direction and thereby the traffic forms another ring contour using the protective capacity of the fiber (fibers) assigned to the opposite direction.

Namely, if a fiber cut occurs in a unidirectional optical span between two nodes, one of the nodes (an initiating node) sends to another one (a receiving node) a coded message called "bridge request" to organize transmission of the problematic traffic via a protective path in the ring. The receiving node, upon receiving the bridge request has to acknowledge its receipt to the initiating node. Upon receiving the acknowledgement, the initiating node that sent the bridge request starts transmitting the traffic via the protective path. All the mentioned messages, and some other coded ones are transmitted within the overhead portion of the standard SDH/SONET frames, more particularly by means of byte K1 of the Multiplex SOH.

It has been recognized by the Inventors, that a particular problem being quite typical for modem complex optical networks, has not been addressed in the standardized protocols MS-SPRING and BLSR-protocols for traffic protection in optical ring networks.

The problem, which is recognized and resolved in the present invention, is a so-called races phenomenon due to looping of protocol messages taking place in a bi-directional optical network in case of occurrence of an unstable unidirectional fault between two nodes. Such a fault may be caused by hardware problems, for example by instable or changeable contacts such as occurring when installing or removing hardware elements, fiber bends, etc.

Many systems, which are presently in operation in the modem optical ring networks, do not recognize and address the above-indicated problem. Neither hardware implementation, nor software tools of these systems prevent racing and cyclical wandering of the mentioned messages, and the systems are therefore susceptible to errors caused by such an effect.

### Summary of the invention

It is therefore the purpose of the present invention to improve the known protocols (at least MS-SPRING and BLSR) of protecting data in optical ring networks for preventing race effects in case of instable unidirectional faults.

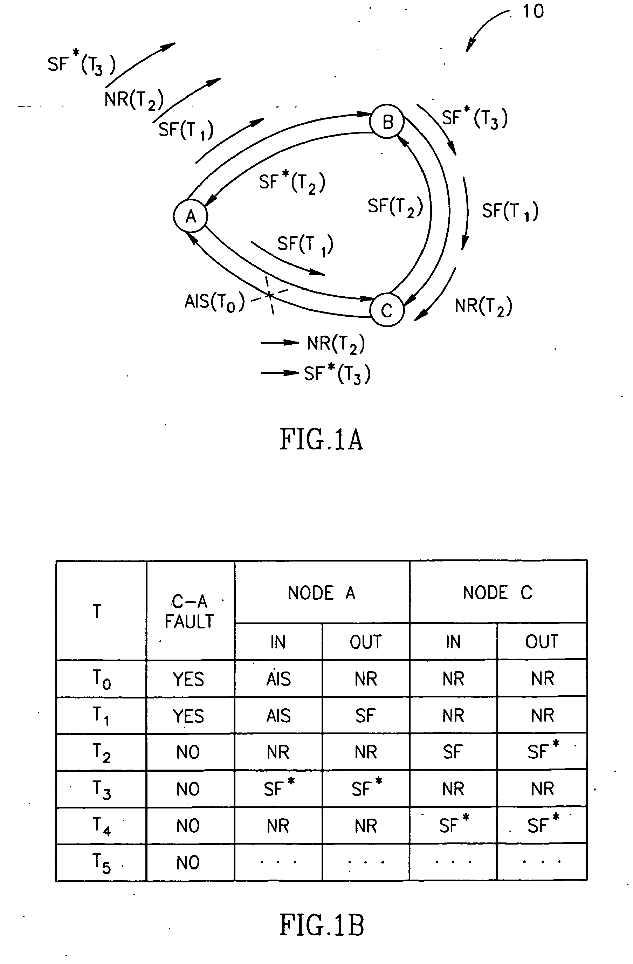

Suppose that we have three nodes A, B and C (see Fig. 1a) connected in a ring and using the MS-Spring protocol. A table of coded messages is shown in Fig. 1b.

The Inventors have recognized that the following scenario most likely takes place when a kind of a unidirectional fiber fault (shown by a dotted cross) occurs in a span, say C-A, and then shortly disappears:
1. The fiber fault causes appearance of a signal SF (Signal Fail) or SD (Signal Degrade). Node A detects the fault on the span between A and C, for example "all ones" Alarm Indication Signal is perceived by node A at (to).
2. Node A sends a bridge request code (SF or SD) to node C, the code (say, SF) is sent both via the short path (A-C) and via the long path (A-B-C) in the ring at (t1).
3. Suppose the fault, that existed at (to) and (t1), quickly disappears - before node A receives an acknowledgement code from node C.
4. Since the fault has disappeared, node A sends a bridge request code NR(t₂) (No Request) to node C via both of the paths, to cancel the previous bridge request code.
5. Node C responds to the "transient" request initiated by Node A at (to) and received on the short path. Node C's response (acknowledgement) is sent on the long path, since the short path is considered faulty. (Likewise, node C will respond to the request received on the long path). So, before receiving the code NR that node A sent to node C, node C has time to send an acknowledgement code SF*(t₂) in response to the former bridge request. The acknowledgement is sent via both the long and the short paths. (It should be noted that, as stipulated in the original MS-SPRING and BLSR protocols, the acknowledgement code is equal to the received bridge request code, and could be indicated just SF. However, for the sake of clarity, the acknowledgement is marked SF* in the drawing and in the table, to indicate the purpose of the code message.)
6. Node A receives the acknowledgement code SF*(t₂) but, since the fault is already absent and node A now does not expect the acknowledgement, it perceives the acknowledgment code SF*(t₂) as a new bridge request code SF. Node A therefore reacts to "a new SF" by issuing and sending an acknowledgement code SF*(t₃) to node C via the long path, to prepare for re-routing the traffic in the ring.
7. Shortly thereafter, node A receives code NR from node C (Remember that before that, node C received NR from node A. According to the standard protocol, if nothing happens, a node sends NR). Upon receiving the NR at node A from node C, the process repeats cyclically from step 4.

As can be seen, such a unidirectional unstable fault may lead and usually leads to a cyclical, endless exchange of erroneous messages between two nodes in a ring optical network. Neither the MS-SPRING protocol, nor the BLSR protocol recognizes and/or resolves the outlined problem. It should be noted that, to the best of the Applicant's knowledge, none of the known companies active in the field has recognized and solved the problem either.

Most important, the Inventors propose a solution that enables eliminating the undesired consequences of such unstable faults.

There is proposed a method of improving protection of data traffic in an optical ring network, where the data is arranged in SDH/SONET frames and the network supports a standardized MS-SPRING/BLSR protocol, the method comprises providing means to distinguish between a first kind and a second kind of coded protocol messages, wherein the first kind of said messages is a bridge request code message sent from a first node (say, node P) to a second node (say, node Q) and signaling about a unidirectional signal failure or degradation between the first node (P) and the second node (Q), and
the second kind of said messages is an acknowledgement coded message sent from the second node (Q) to the first node (P) in response to said bridge request code message.

If the two kinds of messages are identically coded in the standard MS-SPRING/BLSR protocol (and this is exactly the present condition), the proposed method enables discriminating there-between thus preventing excessive exchange of the said first and second kinds of coded messages in the network in case of an unstable fiber fault.

The standard bridge request message mentioned above comprises at least one coded message from the following list: SF-R (Signal Fail in a Ring), SD-R (Signal Degrade in a Ring), inserted in an overhead byte K1 of an SDH/SONET frame.

The distinguishing between the two kinds of coded messages can be achieved by using (and further analyzing) at least one reserved bit value in the SDH/SONET overhead portion in addition to recognizing the presence of a coded message of a bridge request.

More particularly, two predetermined different binary words introduced in the overhead of an SDH/SONET frame may serve for the purpose; for example, the two binary words respectively indicating the two kinds of the coded messages.

It should be noted that in the overhead portion of a standard SDH/SONET frame, a number of reserve bytes values are preserved for a future use.

Preferably, the overhead byte K2 of the SDH/SONET frame can be used for the above purpose.

Further preferably, the mentioned binary words may be formed by using at least one of reserved values of status bits 6-7-8 of the overhead byte K2. It should be explained that the last three bits 6-7-8 of K2 represent status of a node; according to the standard, any transmitting node must transmit its status. Two of the eight status values, 100 and 101, are reserved for future use.

Indications for the distinguishing can preferably be performed in each frame of the SDH/SONET data stream, thereby any change in the predetermined reserved bit or predetermined binary word would immediately be detected.

It should be noted, however, that in high order SDH data streams, such as STM-16 and STM-64, SOH of only the first component STM-1 stream is utilized for service purposes. Therefore, there is an alternative way of using overhead bytes in the high order SDH data streams, for example K1/K2 bytes in unused SOH of adjacent STM1 streams can be used to distinguish an acknowledgement from an initial bridge request.

For example, the reserved value 100' of the status bits may be used in K2 belonging to the second stream in the STM interface to indicate whether the coded message, if appears in byte K1, is a bridge request or the acknowledgement.

The analogous approach can be used in combined SONET data streams.

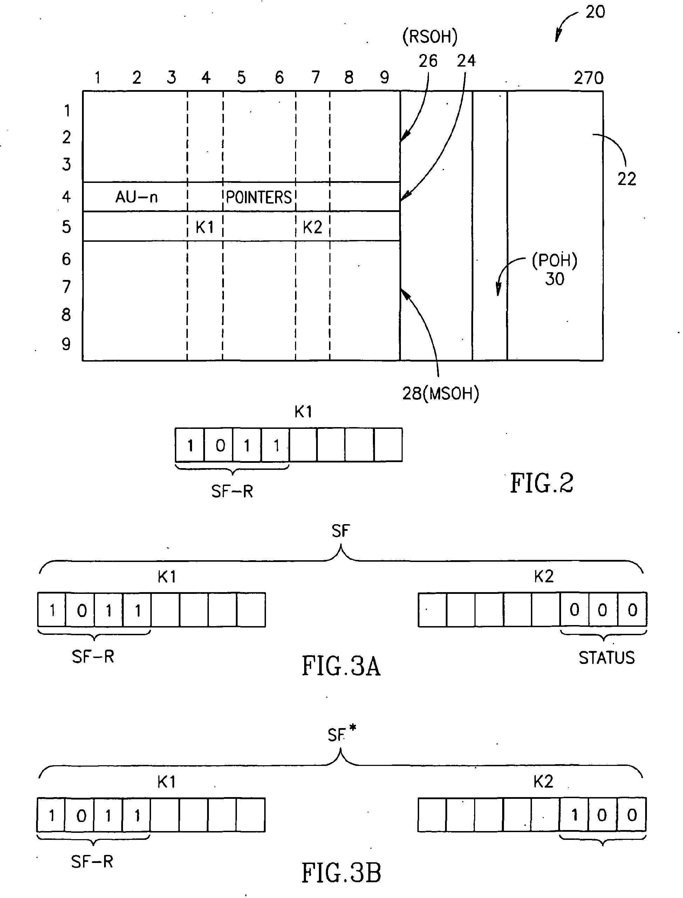

As has been mentioned, one option to distinguish between the types of the coded message is using any of the reserved values 100 or 101 to indicate the discussed node's acknowledgement. One example of such a solution is shown below in Figs. 3a, 3b. However, if in a particular situation there is a need of indicating exact status of the node, this option may interfere with using the status bits for their direct purpose. (According to the MS-SPRING protocol, status "idle" of a node is to be indicated in the status bits by 000, status "bridged" - by 001, status "bridged & switched " - by 010, status "MS-AIS" - by 111, etc.)

There is an alternative solution, which will further be illustrated in Figs, 4a-4c. In addition to analyzing contents of byte K1 where the bridge request code might be inserted, the Inventors propose using and analyzing bits 6,7 and 8 of K2 (status bits) in the following manner:
- 100 (reserved value) will indicate that the node acknowledges a previous bridge request, while the node's status is idle;
- 101 (reserved value) will indicate that the node acknowledges a previous bridge request and the node's status is either bridged or switched;
- whenever bit #6 is 0, it will indicate that the node is not acknowledging request, but initiating the request.

Note: Currently, the standard protocol MS-SPRING and BLSR distinguishes between the status "bridged" ("Br") and the status "bridged & switched" ("Br&Sw"). The above-proposed solution does not allow distinguishing these two statuses when there is an acknowledgement of the previous request. However, such a small feature does not adversely affect general functions of the standard protocol:
The same use of status bits of K2 is applicable for standard SONET frames.

### Brief description of the drawings.

The present invention will be further described and illustrated with reference to the following non-limiting drawings, in which:
**Fig. 1a** illustrates an exemplary simplified ring network comprising a number of nodes capable of operating according to the MS-SPRING or BLSR traffic protection protocol.
**Fig. 1b** shows a time table illustrating circulation of coded messages created in the network of Fig. 1a.
**Fig. 2.** (prior art) schematically illustrates an SDH/SONET frame and byte K1 which, according to the MS-SPRING/BLSR protocol, may carry indication of an SF/SD or other coded messages for a ring network.
**Fig. 3a** illustrates bytes K1 and K2 of the SDH/SONET frame, which, according to a first embodiment of the invention, carry indication of an initial bridge request coded message for a ring network.
**Fig. 3b** illustrates bytes K1 and K2 of the SDH/SONET frame, carrying, according to the first embodiment of the invention, indication of an acknowledgement coded message in response to the initial bridge request coded message.
**Fig. 4a** illustrates how, according to a second embodiment of the invention, bytes K1 and K2 may indicate an initial bridge request.
**Fig. 4b** illustrates how the bytes K1 and K2 may be used for indication the acknowledgement and the node status "Idle".
**Fig. 4c** illustrates how the bytes K1 and K2 may indicate the acknowledgement and the node status "Br" or "Br &Sw".

### Detailed description of the preferred embodiments.

**Fig. 1a** illustrates a ring network 10, comprising nodes A, B and C. The ring 10 is a two-fiber ring, i.e. the nodes are connected by two unidirectional contours, where each direction of data traffic (indicated by arrows) is served by one optical fiber ring. An unstable (transient) unidirectional fault (indicated by a dotted cross on one fiber between nodes A and C) causes cyclically repeating service messages, circulating in the network and creating the undesired traffic load. The order of messages was explained in the summary of the invention, and it is further indicated in a table of **Fig. 1b.**

**Fig. 2** shows a standard frame 20 of the SDH fundamental module STM-1, where the vertical string of numbers 1 to 9 indicate 9 rows of the frame, the horizontal string of numbers schematically mark 270 columns of the frame, intersection of each row and column forms one byte. Each standard frame has an informational payload area 22, and an overhead area comprising: a pointers row 24, a Regeneration Section overhead bytes 26 (RSOH), a Multiplex Section overhead 28 (MSOH) and a Path overhead 30 (POH). Overhead bytes K1 and K2 are shown in the MSOH area.

According to the presently standardized MS-SPRING protocol, byte K1 is intended for carrying various coded messages for traffic protection in the ring.

To the right of the frame, byte K1 is shown indicating a bridge request code within its four first bits. For example, code "1011" which appears in the drawing, is the code of Signal Fail (Ring), or SF-R.

**Fig. 3a** illustrates, using an example of the code indication shown in Fig. 2, how the coded message can be marked as being the initial bridge request message. In the status field of byte K2, according to the standard MS-SPRING protocol may appear one of the standard status values, for example "000". According to the proposed idea, any standard status values (except for those reserved for future use) when appear in the status bits of K2 while the first four bytes of K1 carry the coded message SF-R or SD-R, will advise the regular behavior according to the standard. In the frame of that, the bridge request code should be understood as the initial one, and not its acknowledgement.

**Fig. 3b** illustrates one example of indication for the acknowledgement. If the bridge request code in Byte K1 is as above (SF-R), but the status field of byte K2 in the same frame is equal to the reserved value "100", the combination speaks for that the coded message is an acknowledgement (SF*) of an initial bridge request SF-R. To determine, where the bridge request had arrived from, the source and destination indications can be analyzed at the node receiving the message, and such indications exist in the same overhead bytes K1 and K2.

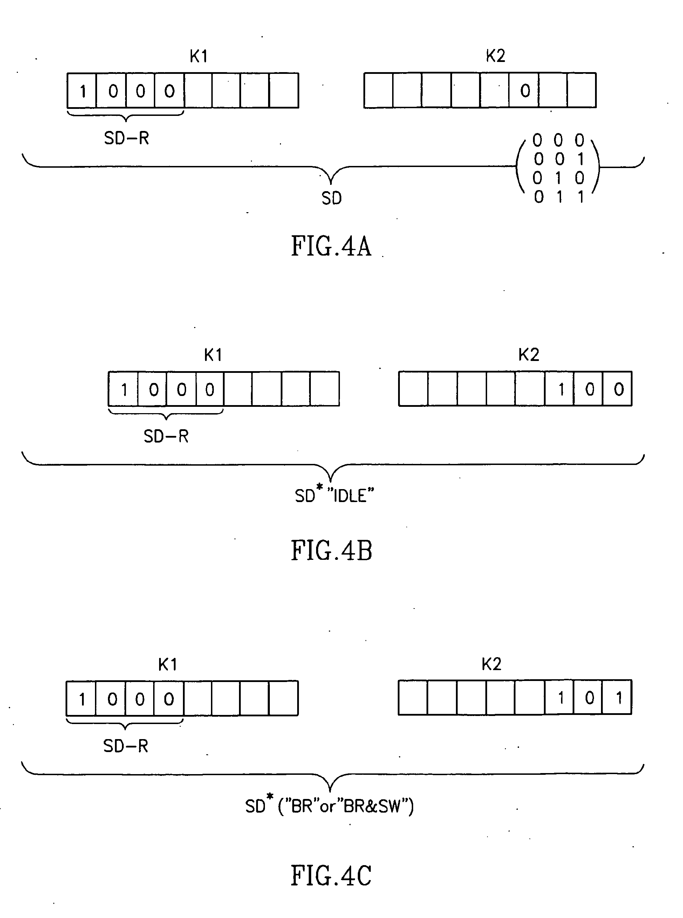

**Fig. 4** illustrates the best mode of marking the acknowledgement according to the invention. Let the initial bridge request has been caused by the coded message of Signal Degrade in a Ring (SD-R).

**Fig. 4a** shows how this initial bridge request is represented in the bytes K1 and K2: four first bits of K1 carry the coded SD-R message 1000, and the status bits 6-7-8 of the byte K2 carry any status indication where bit 6 =0.

**Fig. 4b** shows how the return acknowledgement of the bridge request of Fig. 4a may look. In this example, if the node responding to the bridge request is in the "idle" status, the status bits of K2 will carry the reserved value "100". Together with the coded message in K1, it will be recognized by a receiving node as the acknowledgement (SD*).

**Fig. 4c** shows another example, differing from the example of Fig. 4b in that the status bits of byte K2 comprise the reserved value "101". This combination can be assigned to indicate that the message carried by K1 is an acknowledgement SD* of the initial bridge request SD-R, and that the node issuing the acknowledgement, is either in the "Bridged", or in the "Bridged and Switched" status.

It should be mentioned, that instead of the SF-R, the bridge request code of K1 in Figs. 3a and 3b may be SD-R, i.e. 1000. Also, the reserved value "101" may be used instead of the reserved value "100" for indicating the acknowledgement. Similarly, in Figs. 4a to 4c the bridge request code may be SF-R (1011), and the reserved values "100" and "101" may be used instead one another.

Any of the proposed and/or illustrated ways of indication and recognition of the two different types of messages can be implemented at the nodes in a ring network (say, by using the nodes' embedded software), and would thus prevent cases of cyclical wandering of erroneous messages.

It should be appreciated that though the invention has been illustrated with reference to a number of particular examples, one may find other ways and various implementations to distinguish between the bridge request coded message and its acknowledgement in the MS-SPRING/BLSR protocols by using the principles disclosed in the description and formulated in the claims; such ways and implementations are to be considered part of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for improving protection of data traffic in an optical ring network, where the data is arranged in SDH/SONET frames (20) and the network supports a standardized MS-SPRING/BLSR protocol,
the method comprises providing means to distinguish between a first kind and a second kind of coded protocol messages, wherein
the first kind of said messages is a bridge request message (SF, SD) sent from a first node (A) to a second node (C) and signaling about a unidirectional signal failure or degradation between the first node and the second node,
the second kind of said messages is an acknowledgement message (SF*, SD*) sent from the second node ( C ) to the first node (A) in response to said bridge request message, and wherein
said two kinds of messages are identically coded according to the standardized MS-SPRING/BLSR protocol.

2. The method according to Claim 1, wherein the bridge request message comprises at least one coded message from the following list: SF-R (Signal Fail in a Ring), SD-R (Signal Degrade in a Ring), placed in the first four bits of an overhead byte K1.

3. The method according to Claim 1 or 2, wherein the distinguishing between said two kinds of coded messages is achieved by using at least one reserved bit of the SDH/SONET overhead portion.

4. The method according to Claim 3, comprising using at least one predetermined binary word introduced in the SDH/SONET overhead portion.

5. The method according to Claim 4, wherein an overhead byte K2 of the SDH/SONET frame is used for the distinguishing.

6. The method according to Claim 5, wherein said at least one predetermined binary word is formed by using at least one of reserved values of status bits 6-8 of the overhead byte K2.

7. The method according to Claim 6, wherein the first kind of the messages is indicated in the K2 by any status value except for the reserved values, and wherein the second kind of the messages is indicated by one of the reserved status values of the byte K2.

8. The method according to Claim 6, wherein the first kind of the messages is indicated by a status value wherein bit 6 of K2 is equal to 0, and wherein the second kind of the messages is indicated by one or another of the reserved status values of the byte K2, depending on status of the node transmitting the message.

9. The method according to any one of Claims 3 to 8, wherein said at least one reserved overhead bit is used for indicating the acknowledgement message and, whenever suitable, is activated in each and every SDH/SONET frame of the data stream transmitted from the second node.

10. The method according to any one of Claims 5 to 8, wherein K2-bytes are used in SOH of one or more component STM-1 streams in high order SDH data streams, except for the first STM-1 component stream.

11. A system for performing the method according to any one of Claims 1 to 10, implemented at nodes of the optical ring network and operative to indicate and to recognize the first kind and the second kind of said coded protocol messages.

## Patentansprüche

1. Ein Verfahren zur Verbesserung des Schutzes von Datenverkehr in einem optischen Ringnetzwerk, in dem die Daten in SDH/SONET-Rahmen (20) angeordnet sind und das Netzwerk ein standardisiertes MS-SPRING/BLSR-Protokoll unterstützt,
wobei das Verfahren das Bereitstellen von Mitteln zur Unterscheidung zwischen einer ersten Art und einer zweiten Art von codierten Protokoll-Nachrichten umfasst, wobei
die erste Art der Nachrichten eine Überbrückungsanfrage-Nachricht (SF, SD) ist, die von einem ersten Knoten (A) zu einem zweiten Knoten (C) gesendet wird und einen einseitig gerichteten Signalfehler oder -verschlechterung zwischen dem ersten Knoten und dem zweiten Knoten meldet,
die zweite Art der Nachrichten eine Bestätigungs-Nachricht (SF*, SD*) ist, die von dem zweiten Knoten (C) zu dem ersten Knoten (A) als Antwort auf die Überbrückungsanfrage-Nachricht gesendet wird, und wobei
die zwei Arten von Nachrichten gemäß dem standardisierten MS-SPRING/BLSR-Protokoll identisch codiert werden.

2. Das Verfahren gemäß Anspruch 1, wobei die Überbrückungsanfrage-Nachricht mindestens eine codierte Nachricht aus der folgenden Liste umfasst: SF-R (Signal-Fehler in einem Ring), SD-R (Signal-Verschlechterung in einem Ring), die in den ersten vier Bits eines Overhead-Bytes K1 eingebracht ist.

3. Das Verfahren gemäß Anspruch 1 oder 2, wobei die Unterscheidung zwischen den zwei Arten von codierten Nachrichten unter Verwendung von mindestens einem reservierten Bit des SDH/SONET-Overhead-Teils erzielt wird.

4. Das Verfahren gemäß Anspruch 3, das die Verwendung von mindestens einem vorbestimmten Binärwort umfasst, das in dem SDH/SONET-Overhead-Teil eingesetzt ist.

5. Das Verfahren gemäß Anspruch 4, wobei ein Overhead-Byte K2 des SDH/SONET-Rahmens für die Unterscheidung verwendet wird.

6. Das Verfahren gemäß Anspruch 5, wobei das mindestens eine vorbestimmte Binärwort unter Verwendung von mindestens einem Wert aus reservierten Werten von Zustand-Bits 6-8 des Overhead-Bytes K2 gebildet wird.

7. Das Verfahren gemäß Anspruch 6, wobei die erste Art der Nachrichten in dem K2 durch einen beliebigen Zustands-Wert mit Ausnahme der reservierten Werte angezeigt wird und wobei die zweite Art der Nachrichten durch einen der reservierten Zustands-Werte des Bytes K2 angezeigt wird.

8. Das Verfahren gemäß Anspruch 6, wobei die erste Art der Nachrichten über einen Zustands-Wert angezeigt wird, worin Bit 6 von K2 gleich 0 ist, und wobei die zweite Art der Nachrichten über einen oder einen weiteren der reservierten Zustands-Werte des Bytes K2 in Abhängigkeit von dem Zustand des Knotens, der die Nachricht überträgt, angezeigt wird.

9. Das Verfahren gemäß einem beliebigen der Ansprüche 3 bis 8, wobei das mindestens eine reservierte Overhead-Bit zum Anzeigen der Bestätigungs-Nachricht verwendet wird und, wann auch immer geeignet, in jedem einzelnen SDH/SONET-Rahmen des Datenstroms, der von dem zweiten Knoten übertragen wird, aktiviert wird.

10. Das Verfahren gemäß einem beliebigen der Ansprüche 5 bis 8, wobei K2-Bytes in SOH von einem oder mehreren STM-1-Komponenten-Strömen in höherwertigen SDH-Datenströmen mit Ausnahme des ersten STM-1-Komponenten-Stroms verwendet werden.

11. Ein System zur Durchführung des Verfahrens gemäß einem beliebigen der Ansprüche 1 bis 10, das an Knoten des optischen Ringnetzwerkes implementiert ist und arbeitet, um die erste Art und die zweite Art der codierten Protokoll-Nachrichten anzuzeigen und zu erkennen.

## Revendications

1. Méthode de perfectionnement de la protection du trafic de données dans un réseau à anneau optique, dans lequel les données sont agencées en trames SDH/SONET (20) et le réseau prend en charge un protocole MS-SPRING/BLSR normalisé, la méthode comprenant l'utilisation de moyens pour distinguer entre un premier type et un deuxième type de messages de protocole codés, dans laquelle :
le premier type des dits messages est un message de demande de pont (SF, SD) envoyé d'un premier noeud (A) à un deuxième noeud (C) et signalant une défaillance ou une dégradation de signal unidirectionnelle entre le premier noeud et le deuxième noeud.
le deuxième type des dits messages est un message d'accusé de réception (SF*, SD*) envoyé du deuxième noeud (C) au premier noeud (A) en réponse au dit message de demande de pont,
et dans laquelle les deux types de messages sont codés de façon identique conformément au protocole MS-SPRING/BLSR normalisé.

2. Méthode selon la revendication 1, dans laquelle le message de demande de pont comprend au moins un message codé parmi la liste suivante : SF-R (défaillance de signal dans un anneau), SD-R (dégradation de signal dans un anneau), placé dans les quatre premiers bits d'un octet de service K1.

3. Méthode selon la revendication 1 ou 2, dans laquelle la distinction entre les dits deux types de messages codés est effectuée par utilisation d'au moins un bit réservé de la partie de service de SDH/SONET.

4. Méthode selon la revendication 3, comprenant 'utilisation d'au moins un mot binaire prédéterminé ntroduit dans la partie de service de SDH/SONET.

5. Méthode selon la revendication 4, dans laquelle un octet de service K2 de la trame SDH/SONET est utilisé pour la distinction.

6. Méthode selon la revendication 5, dans laquelle le dit au moins un mot binaire prédéterminé est formé par utilisation d'au moins une de valeurs réservées de bits d'état 6-8 de l'octet de service K2.

7. Méthode selon la revendication 6, dans laquelle le premier type des messages est indiqué dans l'octet K2 par une valeur d'état quelconque à l'exception des valeurs réservées, et dans laquelle le deuxième type des messages est indiqué par une des valeurs d'état réservées de l'octet K2.

8. Méthode selon la revendication 6, dans laquelle le premier type des messages est indiqué par une valeur d'état dans laquelle le bit 6 de K2 est égal à 0, et dans laquelle le deuxième type des messages est indiqué par l'une ou l'autre des valeurs d'état réservées de l'octet K2, en fonction de l'état du noeud transmettant le message.

9. Méthode selon une quelconque des revendications 3 à 8, dans laquelle le dit au moins un bit de service réservé est utilisé pour indiquer le message d'accusé de réception et, lorsque c'est approprié, il est activé dans chaque trame SDH/SONET du flux de données transmis à partir du deuxième noeud.

10. Méthode selon une quelconque des revendications 5 à 8, dans laquelle des octets K2 sont utilisés dans le SOH des flux STM-1 d'un ou plusieurs composants dans des flux de données SDH d'ordre supérieur, à l'exception du premier flux de composants STM-1.

11. Système pour la mise en oeuvre de la méthode selon une quelconque des revendications 1 à 10, mis en oeuvre aux noeuds du réseau à anneau optique et servant à indiquer et à reconnaître le premier type et le deuxième type des dits messages de protocole codés.
